# EUROPÄISCHE PATENTSCHRIFT

(11) **EP 2 812 121 B1**
(45) Veröffentlichungstag und Bekanntmachung des Hinweises auf die Patenterteilung: **01.04.2020**
(21) Anmeldenummer: 13706422.6
(22) Anmeldetag: 08.02.2013
(51) Int. Cl.: B04C 5/04, B04C 5/081

(54) **HYDROZYKLON MIT FEINSTOFFABREICHERUNG IM ZYKLONUNTERLAUF**
HYDROCYCLONE WITH ENRICHMENT OF THE FINE PARTICLES IN THE UNDERFLOW
HYDROCYCLONE AVEC ENRICHISSEMENT DES PARTICULES FINES DANS LA PARTIE D'EVACUATION DES PARTICULES DENSES

(30) Priorität: 10.02.2012 AT 1772012
(43) Veröffentlichungstag der Anmeldung: 17.12.2014
(73) Patentinhaber: Andritz AG, 8045 Graz (AT)
(72) Erfinder: KRAMER, Michael, 8020 Graz (AT)
(74) Vertreter: Tschinder, Thomas
(86) Internationale Anmeldenummer: PCT/EP2013/000380
(87) Internationale Veröffentlichungsnummer: WO 2013/117342

(56) Entgegenhaltungen:
- FR-A1- 2 629 371
- US-A- 3 507 397
- US-A- 4 652 363
- US-A- 4 969 934

## Beschreibung

Den Gegenstand dieser Erfindung bildet ein Hydrozyklon mit einem Zulaufbereich, der einen tangentialen Zulauf für die Aufgabetrübe aufweist, und einem an den Zulaufbereich anschließenden Abscheidebereich mit einer Unterlaufdüse zur Abfuhr von Schwerstoffen, Grobstoffen bzw. Grobkorn.
Den Gegenstand dieser Erfindung bildet auch ein Verfahren zum Betreiben des erfindungsgemäßen Hydrozyklons.

Hydrozyklone sind Fliehkraftabscheider für Suspensionen bzw. Gemische. Mit ihnen werden zumeist Feststoffpartikel abgetrennt oder klassiert. Ebenso können damit Emulsionen, wie z. B. Öl-Wasser-Gemische, getrennt werden.
Der Hydrozyklon ist ein wichtiger Bestandteil der Gipsentwässerung in einer nassen Rauchgasreinigungsanlage. Dabei wird die aus dem Absorber abgezogene Suspension durch einen oder mehrere Hydrozyklone teilentwässert und gelangt anschließend auf einen Bandfilter oder in eine Zentrifuge. Durch dieses Verfahren wird der Gips auf zumeist unter 10% Restfeuchte gebracht und kann anschließend abtransportiert werden.

Herkömmliche Hydrozyklone bestehen in der Regel aus einem zylindrischen Segment mit einem tangentialen Zulauf (Einlaufdüse) und einem daran anschließenden konischen Segment mit der Unterlauf- oder Apexdüse. Der Vortex-Finder bzw. die Oberlaufdüse ragt in Form eines Tauchrohres axial von oben in das Innere des Zyklons.

Unter Oberlauf bzw. Überlauf wird in der vorliegenden Erfindung die spezifisch leichtere und/oder kleinkörnigere Fraktion verstanden und unter Unterlauf die spezifisch schwerere und/oder gröbere Fraktion.

In der vorliegenden Erfindung muss der Oberlauf nicht notwendigerweise den Hydrozyklon "oben" bzw. im Zulaufbereich verlassen. Es sind auch Ausführungsbeispiele denkbar, bei denen der Hydrozyklon im Gleichstromprinzip arbeitet, bei denen also der Unterlauf und der Oberlauf den Hydrozyklon in die gleiche Richtung verlassen.

Die Bezeichnungen "oben" und "unten" gehen in der vorliegenden Beschreibung vom Zulauf und vom Unterlauf aus. Die tatsächliche Positionierung des Hydrozyklons ist davon jedoch weitestgehend unabhängig, so werden häufig auch horizontal eingebaute Hydrozyklone verwendet.

Bei Hydrozyklonen nach dem Gegenstromprinzip wird durch den tangentialen Zulauf in das zylindrische Segment die Flüssigkeit auf eine Kreisbahn gezwungen und strömt in einem abwärtsgerichteten Wirbel nach unten. Durch die Verjüngung im konischen Segment kommt es zu einer Beschleunigung und Verdrängung von Volumen nach innen und zu einem Aufstau im unteren Bereich des Konus. Dies führt zur Bildung eines inneren, aufwärtsgerichteten Wirbels, der durch die Oberlaufdüse abgeführt wird. Ziel ist die Abscheidung der spezifisch schwereren Fraktion (z. B. Feststoff, Grobstoff, Grobkorn) an der Wand des Zyklons und somit der Austrag durch die Unterlaufdüse, während die spezifisch leichtere oder feinkörnigere Fraktion durch die Oberlaufdüse entweicht.

Das Grundprinzip des Trenn- und Klassiereffekts wird durch das Zusammenspiel der Flieh- und Strömungskräfte beschrieben. Während auf große, spezifisch schwere Partikel (Grobstoffe) die Fliehkraft stärker wirkt und diese somit nach außen zur Zyklonwand abgeschieden werden, ist bei kleinen, leichten Partikeln, aufgrund ihrer höheren spezifischen Oberfläche, die Kraft der Strömung auf die Partikel (Widerstandskraft) von übergeordneter Bedeutung.

Bei herkömmlichen Hydrozyklonen sorgt die gleichmäßige Dispergierung von Feinstoffen im Zulauf für eine Teilung dieser Korngrößenklassen gemäß der Aufteilung des Volumenstroms zwischen Oberlauf und Unterlauf. Dies bedeutet, dass normalerweise Feinstoffe in dem Anteil mit den Grobstoffen ausgeschieden werden, wie dies dem Volumensplit Unterlauf / Einlauf entspricht (Volumenstromverhältnis).

Herkömmliche Hydrozyklone schaffen es daher in der Regel nicht, eine disperse Phase, deren Dichte ähnlich der des Fluids ist bzw. deren Partikelgröße klein (< 5 pm) ist, aus dem Unterlauf abzureichern.

Neuere Entwicklungen, wie sie beispielsweise in der DE102009057079A beschrieben werden, gehen einen Schritt weiter, indem sie durch induzieren einer Waschströmung aus einem reinen Fluid versuchen, Feinteile aus dem Unterlauf abzutrennen. Der Waschwasserstrom wird dabei in der Regel im Konus oder im unteren Bereich des Zyklons tangential eingebracht. Diese Verdünnung führt dazu, dass die Feinstoffkonzentration im Grobstoffaustrag, also im Unterlauf, verringert wird. Nachteilig ist dabei, dass durch die eingebrachte Flüssigkeit und die damit einhergehende Verwirbelung bereits abgeschiedene Schwerteile wieder in die Kernströmung gespült werden. Dies reduziert die Reinheit des Oberlaufes. Durch diese Nachteile kann die Abreicherung der Feinstoffe im Unterlauf nur in begrenztem Maße umgesetzt werden, zumeist nur in dem Maße, wie es dem zusätzlich eingebrachten Wasserstrom entspricht.
Die EP 1 069 234 B1 offenbart die Zugabe der Verdünnungsflüssig direkt in die Kernströmung durch ein in der Apexdüse mittig angeordnetes Zulaufrohr.

Die US 4,652,363 offenbart einen Hydrozyklon, bei dem die wässrige Suspension durch eine Lamelle in zwei Teilströme aufgeteilt wird. Durch diese Aufteilung soll der Verschleiß der Zyklonwand gleichmäßiger erfolgen.

Die US 4,696,737 offenbart einen Hydrozyklon zur Reinigung einer Faserstoffsuspension. Dabei sollen Störstoffe über den Unterlauf abgeschieden werden, wogegen die Fasern über den Oberlauf abgeschieden werden. Die Suspensionszuführung und die Verdünnungswasserzuführung sind durch eine Lamelle getrennt.

Der Erfindung liegt daher die Aufgabe zugrunde, einen Hydrozyklon bereitzustellen, der die Trennung derart verbessert, dass sowohl der Fehlaustrag von Feinstoff bzw. Feinkorn im Unterlauf als auch des Grobstoffs bzw. Grobkorns im Oberlauf verringert wird. Die Feinstoffe sollen also - bezogen auf die volumenbezogene Konzentration im Einlauf - im Unterlauf abgereichert werden.

Gelöst wird diese Aufgabe durch einen Hydrozyklon, bei dem durch das Einbringen einer Sperrschicht aus Wasser oder einem anderen Fluid eine reine Phase zur Verfügung gestellt wird,' durch die der Grobstoff sedimentieren muss, wohingegen die Feinfraktion überwiegend im ursprünglichen Strom zurückbleibt. Die Zuführung dieses Sperrfluids erfolgt durch zumindest einen weiteren, von der Suspensionszuführung unabhängigen Zulauf. Der Sperrfluidstrom wird von der Suspension bzw. Aufgabetrübe durch eine Lamelle getrennt und kann im zylindrischen Segment eingebracht werden. Die Lamelle übernimmt dabei die Aufgabe, Vermischungen im Eintrittsbereich zu verhindern und einen Kontakt der Strömungsschichten erst nach Ausbildung eines stabilen Profils zu gewähren.

In der Erfindung ist in Strömungsrichtung der Aufgabetrübe betrachtet nach der Lamelle ein Strömungsseparator angeordnet, durch den der zusammengeführte Sperrfluidstrom und die Aufgabetrübe wieder voneinander getrennt werden. Durch den Strömungsseparator kann eine nachfolgende Vermischung der bereits getrennten Schichten reduziert bzw. verhindert werden.

Denkbar ist auch die Zuführung einer Sperrschicht im Konusbereich, wobei in diesem Fall eine stufige Aufweitung des Zyklondurchmessers vorgesehen sein kann, um den Sperrwasserstrom ohne Verdrängung der Suspension einbringen zu können. Die Hydrozyklonwand bildet dabei auch gleichzeitig die Lamelle.

Der Grundgedanke der Erfindung ist es, durch die Ausbildung einer Sedimentationshilfsschicht (Sperrfluidströmung), die in keiner bzw. nur in geringer Wechselwirkung zur Hauptströmung steht, möglichst definierte Sedimentationsbedingungen zu erhalten, um eine echte Partikeltrennung über deren Sedimentationsweg zu erzielen und keine Anreicherung, wie sonst üblich.

Die Feinanteile (Feinstoffe)verbleiben zum überwiegenden Teil in der Kernströmung. Die Sperrfluidströmung umgibt dabei die Aufgabetrübe ringförmig. Die Feinstoffe bzw. das Feinkorn werden also im Unterlauf abgereichert bzw. im Idealfall gänzlich abgetrennt, bezogen auf die volumenbezogene Konzentration im Einlauf (auch unter Berücksichtigung der zudosierten Sperrfluidmenge bzw. Sperrwassermenge).
Vorzugweise ist der Sperrfluidstrom über den zumindest einen weiteren Zulauf tangential dem Zulaufbereich zuführbar. Dadurch kann sich eine stabile kreisförmige Sperrfluidströmung im Zykloninneren ausbilden.

Vorzugsweise ist die Lamelle im Wesentlichen zylinderförmig oder konisch ausgebildet. Sie kann sich dabei im Zulaufbereich bzw. im zylindrischen Segment vom Einlaufbereich der Sperrfluidströmung bis zum Übergang zum Abscheidebereich bzw. konischen Segment erstrecken oder im konischen Bereich befestigt sein. Dadurch verbleibt genug Zeit, dass sich sowohl in der Sperrfluidschicht als auch in der Aufgabetrübe eine stabile kreisförmige Strömung ausbilden kann.

Es ist günstig, wenn die Lamelle an ihrem unteren Ende spitz zusammenläuft bzw. möglichst dünn ausgeführt ist, sodass der Sperrfluidstrom und die Aufgabetrübe möglichst wirbelfrei zusammenführbar sind. Die beiden Strömungen sollen auch unterhalb der Lamelle möglichst getrennt voneinander weiterströmen.

Vorzugsweise ist der Abstand zwischen der Lamelle und dem Strömungsseparator einstellbar. Dadurch kann auf die Trennkorngröße Einfluss genommen werden.

Die Verwendung eines Strömungsseparators ermöglicht eine Ausführungsform des Hydrozyklons, bei der der Sperrfluidstrom den Unterlauf bildet, also die Fraktion, die mit den Schwer- bzw. Grobstoffen angereichert ist und bei der die von Schwerstoffen abgereichter Aufgabetrübe den Oberlauf bildet. Dabei ist es auch denkbar, dass der Unterlauf und der Oberlauf nach unten aus dem Hydrozyklon abgeführt werden. Der Hydrozyklon würde also in dieser Ausführungsform nach dem Gleichstromprinzip arbeiten.
Dabei ist es günstig, wenn der Hydrozyklon im Wesentlichen einen zylindrischen Aufbau aufweist.

Die Lamelle kann auch Ausgleichsöffnungen aufweisen, die eine Verbindung zwischen der Aufgabetrübe und der Sperrfluidströmung darstellen, dadurch kommt es zu einem Druckausgleich zwischen Sperrfluid und Suspension, bevor die beiden Schichten aufeinander treffen. Idealerweise ist dabei das Sperrfluid immer mit einem etwas höheren Druck beaufschlagt, als die Suspension.

Es ist auch denkbar, dass im Unterlaufbereich zusätzliches Wasch- oder Verdünnungswasser einbringbar ist, sodass dadurch eine weitere Abreicherung von Feistoffen bzw. Feinkorn im Unterlauf erreicht werden kann. Beispielsweise kann im Bereich des Apex ein Wasserstrom axial dem Vortex zugeführt werden, um eine Wiederaufwirbelung bzw. Durchmischung der getrennten Schichten zu minimieren.

Gegenstand der Erfindung bildet auch ein Verfahren zum Betreiben des erfindungsgemäßen Hydrozyklons, wobei der Sperrfluidstrom und die Aufgabetrübe im Hydrozyklon zusammen weitergeführt werden, sobald sich die Sperrfluidströmungen und die Aufgabetrübeströmung stabil ausgebildet haben.

Erfindungsgemäß werden die Sperrfluidströmung und die Aufgabetrübeströmung nach ihrer Zusammenführung mittels eines Strömungsseparators wieder getrennt.
Die beiden getrennten Strömungen können bei einer derartigen Ausführungsform nach unten aus dem Hydrozyklon abgeführt werden. Unterlauf und Oberlauf verlassen also den Hydrozyklon in die gleiche Richtung.

Vorzugsweise wird im Bereich der Unterlaufdüse Wasch- oder Verdünnungswasser eingedüst, beispielsweise über ein in der Unterlaufdüse mittig angeordnetes Zulaufrohr.

Im Folgenden wird der erfindungsgemäße Hydrozyklon anhand von vier Zeichnungen beschrieben. Es zeigen:
Fig. 1 einen schematischen Längschnitt durch ein Ausführungsbeispiel des erfindungsgemäßen Hydrozyklons, wobei der erfindungsgemäße Strömungsseparator nicht dargestellt ist;
Fig. 2 einen Querschnitt im Bereich des Einlaufs durch den erfindungsgemäßen Hydrozyklon;
Fig. 3 und 4 einen schematischen Längschnitt durch weitere Ausführungsbeispiele des erfindungsgemäßen Hydrozyklons, wobei der erfindungsgemäße Strömungsseparator nicht dargestellt ist;
Fig. 5 einen schematischen Längsschnitt durch ein Ausführungsbeispiel des erfindungsgemäßen Hydrozyklons mit einem Strömungsseparator;
Fig. 6 einen Teilausschnitt eines Hydrozyklons mit einem Strömungsseparator;

Gleiche Bezugszeichen in den einzelnen Figuren bezeichnen jeweils gleiche Bauteile.

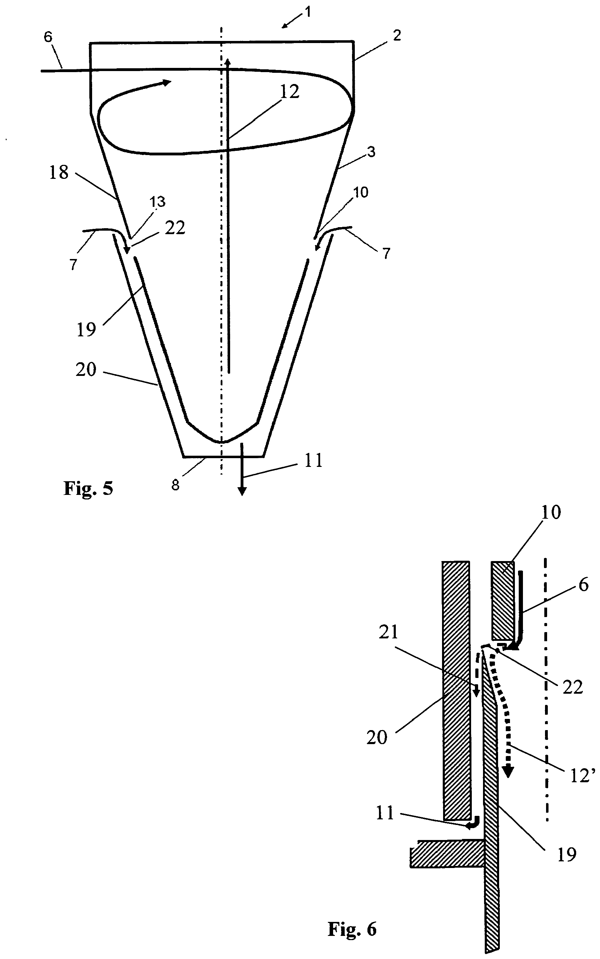

Im Folgenden wird beispielhaft auf einen Hydrozyklon mit zylinderförmigen Einlaufbereich und konischem Abscheidebereich eingegangen. Das erfindungsgemäße Prinzip ist aber auch für rein zylindrische wie in Fig. 6 dargestellt bzw. rein-konische Schleudern bzw. Zyklone anwendbar.

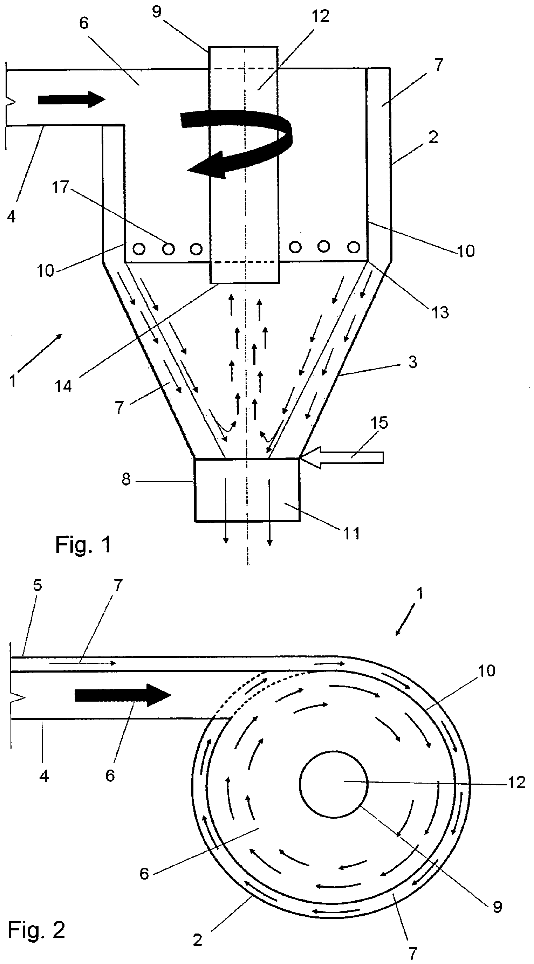

In Figur 1 ist der erfindungsgemäße Hydrozyklon 1 dargestellt, jedoch ohne Strömungsseparator. Er besteht aus einem Zulaufbereich 2 und aus einem daran anschließenden Abscheidebereich 3. Der Zulaufbereich 2 ist hier zylinderförmig und der Abscheidebereich 3 ist konusförmig ausgebildet.
Über den tangentialen Zulauf 4 wird eine Aufgabetrübe 6 dem Hydrozyklon 1 zugeführt. Bei der Aufgabetrübe 6 kann es sich beispielsweise um eine Gipssuspension handeln.
Der Abscheidebereich 3 weist eine Unterlaufdüse 8 zur Abfuhr von Grobstoffen bzw. Grobkorn auf. Durch die Oberlaufdüse 9, die in Form eines Tauchrohres axial in das Innere des Hydrozyklons 1 ragt, kann die spezifisch leichtere bzw. feinkörnigere Fraktion als Oberlauf 12 abgeführt werden.
Neben dem tangentialen Zulauf 4 weist der Hydrozyklon 1 auch einen weiteren Zulauf 5 (in Fig. 2 dargestellt) für den Sperrfluidstrom 7 auf, der hier ebenfalls tangential dem Zulaufbereich 2 zugeführt wird. Beim Sperrfluid 7 handelt es sich beispielsweise um Wasser, Alkohol oder Öl. Der Sperrfluidstrom 7 und die Aufgabetrübe 6 werden dem Hydrozyklon 1 getrennt zugeführt und durch die Lamelle 10 voneinander getrennt. Bei der Lamelle 10 handelt es sich beispielsweise um ein zylinderförmiges, dünnwandiges Bauteil aus Metall. Die reine Sperrfluidströmung 7 trifft am unteren Ende 13 der Lamelle 10 mit der eigentlichen Suspensionsströmung (Aufgabetrübe 6) zusammen. Dies erfolgt, sobald die Strömungen vom Sperrfluid 7 und der Aufgabetrübe 6 stabil ausgebildet sind.

Nach der Zusammenführung der beiden Volumenströme 6, 7 stellt sich eine Sedimentationsbewegung von Schwerteilen (Grobstoffen) durch die Sperrschicht 7 ein. Dadurch kommt es zu einer Abreicherung der Feinstoffe im Unterlauf 11. Im konischen Abscheidebereich 3 erfolgt die Strömungsführung wie in konventionellen Hydrozyklonen.

Die Lamelle 10 weist hier Ausgleichsöffnungen 17 auf, die eine Verbindung zwischen der Aufgabetrübe 6 und der Sperrfluidströmung 7 darstellen, dadurch kommt es zu einem Druckausgleich zwischen Sperrfluid 7 und Suspension 6. Diese Ausgleichslöcher sind auch im Bereich des Zulaufs 5 denkbar.

Durch die Strömungspfeile wird angedeutet, dass sich die Sperrfluidströmung 7 und die Aufgabetrübe 6 möglichst wenig miteinander vermischen. Die Sperrfluidströmung 7 bildet also zur Wand des konusförmigen Abscheidebereiches 3 hin eine Sperrfluidschicht 7 aus.

Optional kann im Abscheidebereich 3 bzw. im Unterlaufbereich zusätzlich Wasch- oder Verdünnungswasser 15 eingebracht werden, dadurch kann der volumenbezogene Anteil der Feinstoffe im Unterlauf 11 weiter reduziert werden.

Die Mündungsöffnung 14 der Oberlaufdüse 9 endet hier im Bereich unterhalb des Endes 13 der Lamelle 10.
Je nach den jeweiligen Volumenanteilen in der Sperrfluidströmung 7 und der Aufgabetrübe 6 wird die Abscheidung der Schwerteilfraktion (Grobstoffe) mehr oder weniger scharf sein.

Figur 2 stellt einen Querschnitt durch einen erfindungsgemäßen Hydrozyklon 1 im Bereich des Einlaufs dar. Hierbei erkennt man gut den tangentialen Zulauf 4 für die Aufgabetrübe 6 und den tangentialen Zulauf 5 für die Sperrfluidschicht 7. Diese beiden Zuläufe 4, 5 münden hier im Wesentlichen parallel in den Zulaufbereich 2.

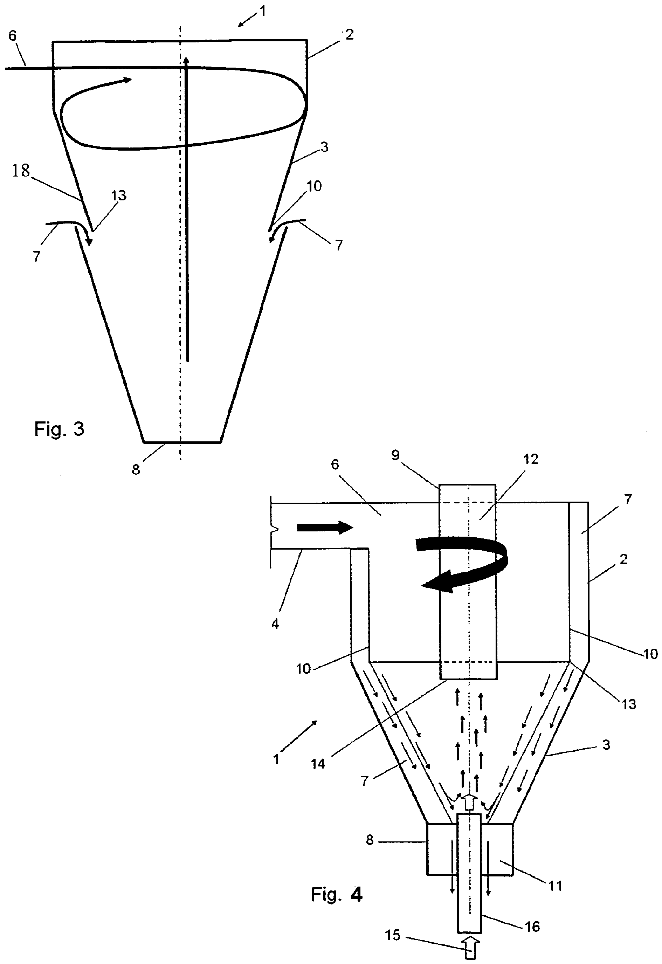

In Fig. 3 ist ein weiteres Ausführungsbeispiel des Hydrozyklons 1 dargestellt. Der konusförmige Abscheidebereich 3 des Hydrozyklons 1 hat eine stufenförmige Erweiterung, durch die das Sperrfluid 7 zudosiert wird. Die Aufgabetrübe 6 und das Sperrfluid 7 werden dabei durch die Lamelle 10, die hier gleichzeitig einen Teil des Zyklongehäuses 18 darstellt, voneinander getrennt. Die Lamelle 10 ist hier konisch ausgebildet. Der Sperrfluidstrom 7 wird dem Hydrozyklon 1 tangential zugeführt.

Fig. 4 zeigt einen Hydrozyklon 1 bei dem zusätzliche Wasch- oder Verdünnungswasser 15 über ein in die Unterlaufdüse 8 hineinragendes Zulaufrohr 16 zudosiert wird. Das Zulaufrohr 16 ist mittig in der Unterlaufdüse 8 angeordnet.

Fig. 5 zeigt ein weiteres Ausführungsbeispiel des erfindungsgemäßen Hydrozyklons 1. Dabei ist unterhalb der Lamelle 10 ein Strömungsseparator 19 angeordnet. Die Lamelle 10 wird hier durch die Hydrozyklonwand 18 gebildet, sie kann aber auch als separates Bauteil ausgeführt sein. Durch den Strömungsseparator 19 wird der Sperrfluidstrom 7 wieder von der Aufgabetrübe 6 getrennt, somit wird verhindert, dass Grobstoff, der durch den Sedimentationsspalt 22 in den Sperrfluidstrom 7 sedimentiert ist, wieder in die Aufgabetrübe 6 zurückströmt. Die mit Grobstoffen angereicherte Sperrfluidströmung 7 strömt zwischen Strömungsseparator 19 und Außenwand 20 nach unten aus dem Hydrozyklon 1 und bildet so den Unterlauf 11. Die mit Grobstoffen abgereicherte Aufgabetrübe 6 strömt als Oberlauf 12 nach oben aus dem Hydrozyklon 1.
Der Sedimentationsspalt 22 ist vorzugsweise einstellbar, sodass dadurch auf die Trennkorngröße Einfluss genommen werden kann.

In Fig. 6 ist die Lamelle 10, der Sedimentationsspalt 22 und der Strömungsseparator 19 eines weiteren Ausführungsbeispiels eines Hydrozyklons 1 mit einem Strömungsseparator 19 dargestellt. Dieser Hydrozyklon 1 arbeitet nach dem Gleichstromprinzip. Die mit Grobstoffen 21 abgereicherte Aufgabetrübe 6, also der Oberlauf 12', verlässt dabei den Hydrozyklon 1 nach unten, ebenso wie der mit Grobstoffen 21 angereicherte Unterlauf 11. Dieser nach dem Gleichstromprinzip (Oberlauf 12' und Unterlauf 11 werden in die gleiche Richtung abgezogen) arbeitende Hydrozyklon 1 hat vorzugsweise einen zylindrischen Aufbau, da dies strömungstechnische Vorteile mit sich bringt.

Die in den Zeichnungen dargestellten Ausführungsformen stellen lediglich eine bevorzugte Ausführung der Erfindung dar. Die Erfindung umfasst auch andere Ausführungsformen, bei denen beispielsweise mehrere weitere Zuläufe 5 für den Sperrfluidstrom 7 vorgesehen sind. Bei derartigen Hydrozyklonen würde dann das Sperrfluid in mehreren Stufen zudosiert werden.

## Patentansprüche

1. Hydrozyklon (1) mit einem Zulaufbereich (2) mit einem tangentialen Zulauf (4) für eine Aufgabetrübe (6) und einem weiteren an den Zulaufbereich (2) anschließenden Abscheidebereich (3) mit einer Unterlaufdüse (8) zur Abfuhr von Schwerstoffen bzw. Grobkorn, wobei ein weiterer Zulauf (5) zur Zufuhr eines Sperrfluidstromes (7) vorgesehen ist, wobei das Sperrfluid (7) und die Aufgabetrübe (6) im Hydrozyklon (1) zusammenführbar sind und dass sie vor ihrer Zusammenführung durch eine Lamelle (10) voneinander getrennt sind, **dadurch gekennzeichnet, dass** in Strömungsrichtung der Aufgabetrübe (6) betrachtet der Lamelle (10) nachfolgend ein Strömungsseparator (19) angeordnet ist, durch den der zusammengeführte Sperrfluidstrom (7) und die Aufgabetrübe (6) wieder voneinander trennbar sind.

2. Hydrozyklon (1) nach Anspruch 1, **dadurch gekennzeichnet, dass** über den zumindest einen weiteren Zulauf (5) der Sperrfluidstrom (7) tangential dem Zulaufbereich (2) zuführbar ist.

3. Hydrozyklon (1) nach Anspruch 1, **dadurch gekennzeichnet, dass** der Zulauf (5) den Sperrfluidstrom (7) tangential dem Abscheidebereich (3) zuführt, wobei an der Stelle der Zusammenführung eine stufige Erweiterung im Hydrozyklon (1) vorgesehen ist, sodass die Hydrozyklonwand (18) die Lamelle (10) bildet.

4. Hydrozyklon (1) nach einem der Ansprüche 1 bis 3, **dadurch gekennzeichnet, dass** sich die Lamelle (10) bis in den Abscheidebereich (3) erstreckt.

5. Hydrozyklon (1) nach Anspruch 4, **dadurch gekennzeichnet, dass** der Abstand zwischen der Lamelle (10) und dem Strömungsseparator (19) einstellbar ist.

6. Hydrozyklon (1) nach einem der Ansprüche 1 bis 5, **dadurch gekennzeichnet, dass** der Sperrfluidstrom (7) den Unterlauf (11) bildet und dass die von Schwerstoffen abgereichter Aufgabetrübe (6) den Oberlauf (12, 12') bildet.

7. Hydrozyklon (1) nach Anspruch 6, **dadurch gekennzeichnet, dass** der Unterlauf (11) und der Oberlauf (12') nach unten aus dem Hydrozyklon (1) abgeführt werden.

8. Hydrozyklon (1) nach Anspruch 7, **dadurch gekennzeichnet, dass** der Hydrozyklon (1) im Wesentlichen einen zylindrischen Aufbau aufweist.

9. Hydrozyklon (1) nach einem der Ansprüche 1 bis 8, **dadurch gekennzeichnet, dass** im Abscheidebereich (3) bzw. im Unterlaufbereich zusätzliches Wasch- oder Verdünnungswasser (15) einbringbar ist.

10. Hydrozyklon (1) nach Anspruch 9, **dadurch gekennzeichnet, dass** das zusätzliche Wasch- oder Verdünnungswasser (15) über ein in die Unterlaufdüse (8) hineinragendes Zulaufrohr (16) zuführbar ist.

11. Verfahren zum Betreiben eines Hydrozyklons (1) nach einem der Ansprüche 1 bis 10, **dadurch gekennzeichnet, dass** der Sperrfluidstrom (7) und die Aufgabetrübe (6) im Hydrozyklon (1) zusammen weitergeführt werden, sobald sich die Sperrfluidströmung (7) und Aufgabetrübeströmung (6) stabil ausgebildet haben und dass die Sperrfluidströmung (7) und die Aufgabetrübeströmung (6) nach ihrer Zusammenführung mittels eines Strömungsseparators (19) wieder getrennt werden.

12. Verfahren zum Betreiben eines Hydrozyklons (1) nach Anspruch 11, **dadurch gekennzeichnet, dass** die beiden getrennten Strömungen (11, 12') nach unten aus dem Hydrozyklon (1) abgeführt werden.

13. Verfahren zum Betreiben eines Hydrozyklons (1) nach einem der Ansprüche 11 bis 12, **dadurch gekennzeichnet, dass** in der Unterlaufdüse (8) Wasch- oder Verdünnungswasser (15) eingedüst wird.

## Claims

1. A hydrocyclone (1) with an inflow region (2) having a tangential inflow (4) for a feed slurry (6) and with a further separation region (3) following the inflow region (2) and having an underflow nozzle (8) for the discharge of heavy materials or coarse grain, where a further inflow (5) for the supply of a barrier fluid stream (7) is provided, the barrier fluid (7) and the feed slurry (6) being combinable in the hydrocyclone (1), and where, before being combined, they are separated from one another by a lamella (10), **characterized in that** a flow separator (19), by means of which the combined barrier fluid stream (7) and the feed slurry (6) can be separated from one another again, is arranged after the lamella (10), as seen in the direction of flow of the feed slurry (6).

2. Hydrocyclone (1) according to Claim 1, **characterized in that** the barrier fluid stream (7) can be supplied through the at least one other inflow (5) at a tangent to the inflow region (2).

3. Hydrocyclone (1) according to Claim 1, **characterized in that** the inflow (5) supplies the barrier fluid stream (7) tangentially to the separation region (3), a stepped widening in the hydrocyclone (1) being provided at the combination point, so that the hydrocyclone wall (18) forms the lamella (10).

4. Hydrocyclone (1) according to one of Claims 1 to 3, **characterized in that** the lamella (10) extends into the separation region (3).

5. Hydrocyclone (1) according to Claim 4, **characterized in that** the distance between the lamella (10) and the flow separator (19) is adjustable.

6. Hydrocyclone (1) according to one of Claims 1 to 5, **characterized in that** the barrier fluid stream (7) forms the underflow (11), and **in that** the feed slurry (6) depleted of heavy materials forms the overflow (12, 12').

7. Hydrocyclone (1) according to Claim 6, **characterized in that** the underflow (11) and the overflow (12') are discharged from the hydrocyclone (1) downwards.

8. Hydrocyclone (1) according to Claim 7, **characterized in that** the hydrocyclone (1) essentially has a cylindrical setup.

9. Hydrocyclone (1) according to one of Claims 1 to 8, **characterized in that** additional washing or dilution water (15) can be introduced in the separation region (3) or in the region of the underflow.

10. Hydrocyclone (1) according to Claim 9, **characterized in that** additional washing or dilution water (15) can be introduced through an inflow tube (16) projecting into the underflow nozzle (18).

11. Method for operating a hydrocyclone (1) according to one of Claims 1 to 10, **characterized in that** the barrier fluid stream (7) and the feed slurry (6) are carried along together in the hydrocyclone (1) as soon as the flows of the barrier fluid (7) and feed slurry (6) have become stable and **in that** the barrier fluid flow(7) and the the feed slurry flow (6), after being combined, are separated again by means of a flow separator (19).

12. Method for operating a hydrocyclone (1) according to Claim 11, **characterized in that** the two separate flows (11, 12') are discharged from the hydrocyclone (1) downwards.

13. Method for operating a hydrocyclone (1) according to one of Claims 11 to 12, **characterized in that** washing or diluting water (15) is injected in the underflow nozzle (8).

## Revendications

1. Hydrocyclone (1) comprenant une zone d'arrivée (2) dotée d'une arrivée tangentielle (4) pour une boue entrante (6) et une autre zone de séparation (3) suivant la zone d'arrivée (2) et dotée d'une buse de souverse (8) pour évacuer des matières lourdes ou des grains grossiers, une autre arrivée (5) servant à introduire un flux de fluide de barrage (7), le fluide de barrage (7) et la boue entrante (6) pouvant être combinés dans l'hydrocyclone (1) et où ils peuvent être séparés par une lamelle (10) l'un de l'autre avant qu'ils ne soient combinés, **caractérisé en ce qu'**un séparateur de flux (19), au moyen duquel le flux de fluide barrage combiné (7) et la boue entrante (6) peuvent être de nouveau séparés l'un de l'autre, est disposé après la lamelle (10), comme observé dans le sens de l'écoulement de la boue entrante (6).

2. Hydrocyclone (1) selon la revendication 1, **caractérisé en ce que** ladite autre arrivée (5) permet d'introduire le flux de fluide de barrage (7) tangentiellement dans la zone d'arrivée (2) .

3. Hydrocyclone (1) selon la revendication 1, **caractérisé en ce que** l'arrivée (5) introduit le flux de fluide de barrage (7) tangentiellement dans la zone de séparation (3), un élargissement étagé dans l'hydrocyclone (1) étant ménagé au point de combinaison de manière à ce que la paroi (18) de l'hydrocyclone (18) forme la lamelle (10).

4. Hydrocyclone (1) selon l'une quelconque des revendications 1 à 3, **caractérisé en ce que** la lamelle (10) s'étend jusque dans la zone de séparation (3).

5. Hydrocyclone (1) selon la revendication 4, **caractérisé en ce que** la distance entre la lamelle (10) et le séparateur d'écoulement (19) peut être réglée.

6. Hydrocyclone (1) selon l'une quelconque des revendications 1 à 5, **caractérisé en ce que** le flux de fluide barrage (7) forme la souverse (11) et **en ce que** la boue entrante (7) appauvrie des matières lourdes forme la surverse (12, 12').

7. Hydrocyclone (1) selon la revendication 6, **caractérisé en ce que** la souverse (11) et la surverse (12') sont évacuées de l'hydrocyclone (1) par le bas.

8. Hydrocyclone (1) selon la revendication 7, **caractérisé en ce que** l'hydrocyclone (1) est de conception essentiellement cylindrique.

9. Hydrocyclone (1) selon l'une quelconque des revendications 1 à 8, **caractérisé en ce que** de l'eau de dilution ou de lavage (15) peut être en outre introduite dans la zone de séparation (3) ou dans la zone de souverse.

10. Hydrocyclone (1) selon la revendication 9, **caractérisé en ce que** l'eau de dilution ou de lavage (15) peut être introduite par un tube d'arrivée (16) faisant saillie dans la buse de souverse (8) .

11. Procédé de fonctionnement d'un hydrocyclone (1) selon l'une des revendications 1 à 10, **caractérisé en ce que** le flux de fluide barrage (7) et la boue entrante (6) sont acheminés conjointement dans l'hydrocyclone (1) dès que le flux de fluide barrage (7) et le flux de boue entrante (6) sont devenus stables et **en ce que** le flux de fluide barrage (7) et le flux de boue entrante (6), après avoir été combinés, sont de nouveau séparés au moyen d'un séparateur de flux (19).

12. Procédé de fonctionnement d'un hydrocyclone (1) selon la revendication 11, **caractérisé en ce que** les deux flux séparés (11, 12') sont évacués de l'hydrocyclone (1) par le bas.

13. Procédé de fonctionnement d'un hydrocyclone (1) selon une des revendications 11 à 12, **caractérisé en ce que** l'eau de dilution ou de lavage (15) peut être injectée dans la buse de souverse (8).
